# EUROPÄISCHE PATENTSCHRIFT

(11) **EP 1 709 861 B1**
(45) Veröffentlichungstag und Bekanntmachung des Hinweises auf die Patenterteilung: **22.06.2011**
(21) Anmeldenummer: 06112364.2
(22) Anmeldetag: 07.04.2006
(51) Int. Cl.: A01D 43/08

(54) **Auswurfkrümmer für einen Feldhäcksler**
Discharge spout for a forage harvester
Goulotte de décharge pour une ensileuse

(30) Priorität: 09.04.2005 DE 102005016334
(43) Veröffentlichungstag der Anmeldung: 11.10.2006
(73) Patentinhaber: Deere & Company, Moline, IL 61265-8098 (US)
(72) Erfinder: Hettiger, Marcus, 66115, Saarbrücken (DE)
(74) Vertreter: Holst, Sönke

(56) Entgegenhaltungen:
- DE-A1- 2 842 874
- DE-A1- 10 021 660
- DE-A1- 19 641 211
- US-A- 4 130 300
- US-A- 4 251 170

## Beschreibung

Feldhäcksler werden in der Landwirtschaft verwendet, um Erntegut von einem Feld abzuschneiden oder aufzusammeln, mittels einer Häckseltrommel oder eines Scheibenradhäckslers zu häckseln und, in der Regel nach einer Beschleunigung mittels eines Gebläses, durch einen in seiner Position verstellbaren Auswurfkrümmer auf ein Transportfahrzeug auszutragen. Die geernteten Pflanzen werden in den meisten Fällen als Silage zum Verfüttern an Tiere verwendet.

Im Stand der Technik weist der Auswurfkrümmer aus Fertigungs- und Kostengründen in der Regel einen rechteckigen Querschnitt auf und setzt sich aus massiven Blechen zusammen, die seine Wände definieren (s. DE 100 21 660 A). Ein oberes Blech begrenzt den Erntegutstrom nach oben, während seitliche Bleche den Erntegutstrom in seitlicher Richtung begrenzen und gleichzeitig eine hinreichende Stabilität des Auswurfkrümmers in vertikaler Richtung bereitstellen. Von der Unterseite her sind die gebräuchlichen Auswurfkrümmer in der Regel teilweise oder vollständig durch Bodenbleche geschlossen. Bei kleineren Anbauhäckslern (DE 11 65 333 A) kamen auch runde Querschnitte des Auswurfkrümmers zum Einsatz.

In der DE 103 35 583 A wird ein Auswurfkrümmer vorgeschlagen, der über mindestens einen Teilbereich seiner Länge trapezförmig oder kurvenförmig ausgebildet ist. Dadurch soll vermieden werden, dass sich Erntegut am Boden und an den unteren Bereichen der seitlichen Wände des Auswurfkrümmers ansammelt und dort haften bleibt.

Die gebräuchlichen, rechteckigen Auswurfkrümmer sind aufgrund der massiven Ausführung der Wände relativ schwer. Die Ausführungsform nach DE 103 35 583 A hat durch die Kurven- oder Trapezform nur minimale Gewichtsvorteile.

Da insbesondere die oberen und in geringerem Maße auch die seitlichen Wände des Auswurfkrümmers durch das vorbeiströmende bzw. aufprallende Erntegut mit der Zeit verschleißen, wurden in der US 3 110 521 A Verschleißbleche vorgeschlagen, die an der Innenseite der äußeren Wand austauschbar angebracht werden. Als nachteilig ist der wegen der schlechten Zugänglichkeit relativ aufwändige Austausch der Verschleißbleche anzusehen.

In der DE 196 41 211 A wird vorgeschlagen, die äußere Wand des Auswurfkrümmers in einem Prallbereich in der Form eines austauschbaren Verschleißblechs zu realisieren. Dadurch wird zwar der Austausch des Verschleißblechs erleichtert, das Gesamtgewicht des Auswurfkrümmers aber nicht positiv beeinflusst.

Die der Erfindung zu Grunde liegende Aufgabe wird darin gesehen, einen verbesserten Auswurfkrümmer für einen Feldhäcksler bereitzustellen, der sich bei gegebenen Abmessungen durch ein vermindertes Gewicht auszeichnet bzw. bei gegebenem Gewicht vergrößerte Abmessungen ermöglicht, und vorzugsweise einen leichten Austausch verschleißender Elemente erlaubt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Auswurfkrümmer in Form eines rahmen- bzw. gitterförmigen Stützzusammenbaus mit einem an seiner Innenseite angebrachten Verschlusselement zu realisieren. Der Auswurfkrümmer ist demnach über zumindest einen Teilbereich seiner Länge in der Art eines Gittermasts eines Krans oder eines Hochspannungsmasts ausgeführt. Der Stützzusammenbau stellt zumindest den Hauptteil der mechanischen Stabilität des Auswurfkrümmers bereit und kann aufgrund der Rahmen- bzw. Gitterform relativ gewichtsarm realisiert werden. Das Verschlusselement begrenzt und führt den Erntegutstrom und schützt den Stützzusammenbau vor durch Erntegut bedingter Abrasion. Da es keine oder nur eine geringe mechanische Stabilität des Auswurfkrümmers bereitzustellen braucht, kann es dem zu erwartenden Verschleiß entsprechend dimensioniert werden. Beispielsweise kann ein an einer seitlichen Wand des Auswurfkrümmers angeordnetes Verschlusselement dünner als ein an der oberen Wand angeordnetes Verschlusselement gewählt werden.

Auf diese Weise wird zum einen eine Gewichtsreduzierung erreicht und zum anderen die Stabilität erhöht. Die an der Innenseite des Stützzusammenbaus angebrachten Verschlusselemente sind durch die Rahmen- bzw. Gitterform des Stützzusammenbaus sehr gut zugänglich und lassen sich demnach leicht ein- bzw. ausbauen. Der Auswurfkrümmer kann ohne wesentliche Gewichtszunahme länger als die bekannten Auswurfkrümmer dimensioniert werden, um auch bei den derzeit ständig wachsenden Arbeitsbreiten der Erntevorsätze einen hinreichenden seitlichen Abstand zwischen dem Transportfahrzeug und dem Erntevorsatz des Feldhäckslers zu ermöglichen.

In einer bevorzugten Ausführungsform der Erfindung umfasst der Stützzusammenbau des Auswurfkrümmers sich an seinen Kanten bzw. Ecken in seiner Längsrichtung erstreckende Längsträger. Benachbarte Längsträger werden in gewissen Abständen durch Streben untereinander verbunden, die mit den Längsträgern rechte, stumpfe oder spitze Winkel einschließen können.

In den Zeichnungen ist ein nachfolgend näher beschriebenes Ausführungsbeispiel der Erfindung dargestellt. Es zeigt:
- Fig. 1: einen Feldhäcksler mit einem erfindungsgemäßen Auswurfkrümmer,
- Fig. 2: eine perspektivische Ansicht auf den Stützzusammenbau des Auswurfkrümmers, und
- Fig. 3: eine perspektivische Ansicht auf den Stützzusammenbau aus Figur 2 mit angebrachten Verschlusselementen.

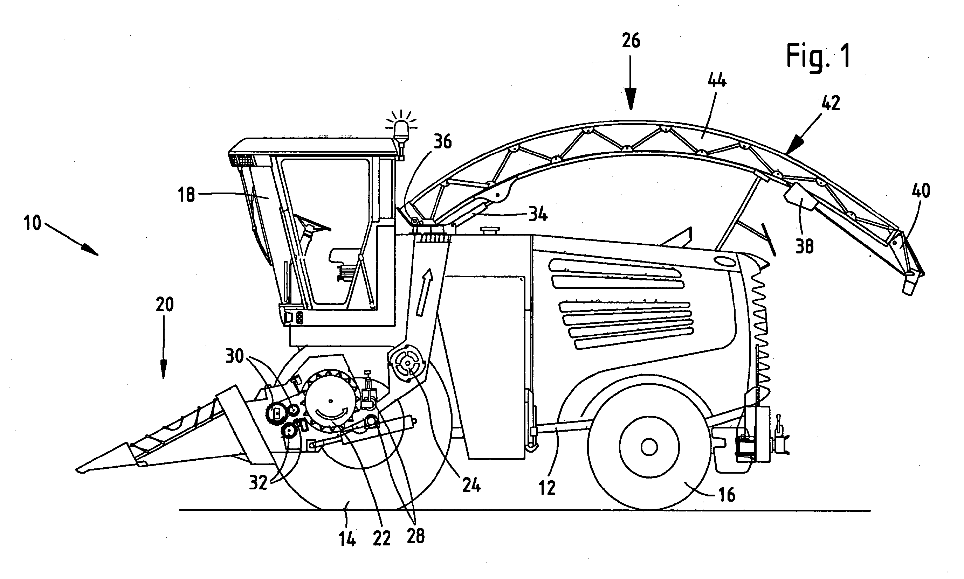

Ein in der Figur 1 gezeigter selbst fahrender Feldhäcksler 10 baut sich auf einem Rahmen 12 auf, der von angetriebenen vorderen Rädern 14 und lenkbaren rückwärtigen Rädern 16 getragen wird. Die Bedienung des Feldhäckslers 10 erfolgt von einer Fahrerkabine 18 aus, von der aus ein zur Ernte stängelartiger Pflanzen geeigneter Erntevorsatz 20 einsehbar ist. Mittels des Erntevorsatzes 20, der in der dargestellten Ausführungsform ein reihenunabhängig arbeitendes Maisgebiss ist, vom Boden aufgenommenes Gut, z. B. Mais, Getreide oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Erntegut verlässt die Erntemaschine 10 zu einem nebenher fahrenden Anhänger über einen Auswurfkrümmer 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Der Auswurfkrümmer 26 kann an seinem stromauf liegenden Ende durch einen ersten Aktor (nicht eingezeichnet) um die Hochachse gedreht werden. Ein zweiter Aktor 34 erlaubt eine Höhenverstellung des Auswurfkrümmers 26 um eine horizontale Achse 36 und ein dritter Aktor 38 ermöglicht es, eine Auswurfklappe 40 zu verschwenken.

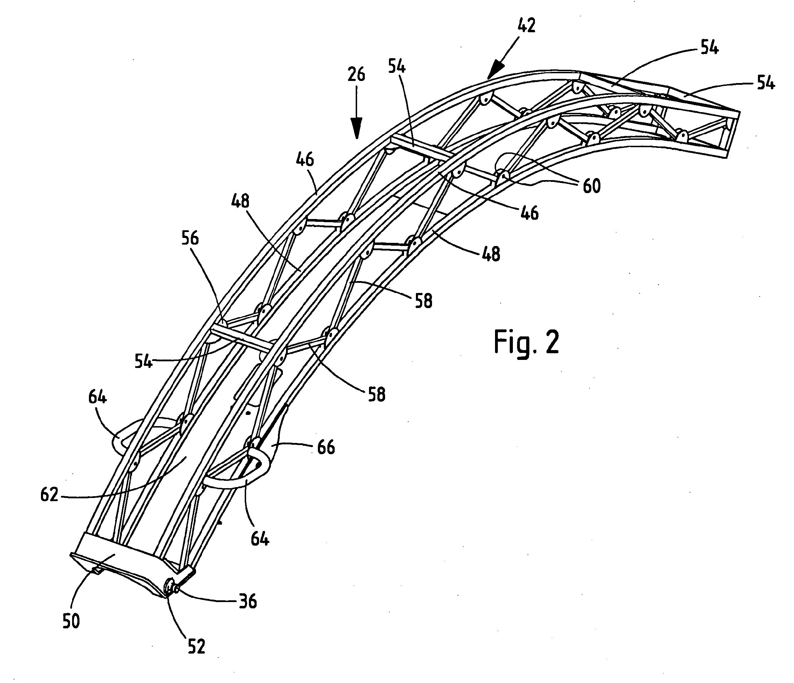

Der Auswurfkrümmer 26 setzt sich aus einem Stützzusammenbau 42 und an dessen Innenseite lösbar angebrachten Verschlusselementen 44 zusammen. Der Stützzusammenbau 42 ist in der Figur 2 detaillierter dargestellt. Er umfasst zwei sich über seine gesamte Länge erstreckende, in sich bogenförmig gekrümmte obere Längsträger 46 sowie zwei sich über seine gesamte Länge erstreckende, ebenfalls in sich gekrümmte untere Längsträger 48. Die Längsträger 46, 48 definieren zwischen sich einen rechteckförmigen Innenquerschnitt. Dieser Innenquerschnitt könnte jedoch auch trapezförmig sein mit einem Abstand der oberen Längsträger 46, der kürzer als der Abstand zwischen den unteren Längsträgern 48 ist. Am dem Feldhäcksler 10 zugewandten, in der Figur 2 links eingezeichneten Ende sind die Längsträger 46, 48 untereinander durch einen U-förmigen Schweißzusammenbau 50 verbunden, der auch einen Zapfen 52 umfasst, der am Rahmen 12 des Feldhäckslers 10 um die Achse 26 schwenkbar angelenkt ist.

Die oberen Längsträger 46 sind untereinander durch vier obere Streben 54 verbunden, die mit den oberen Längsträgern 46 jeweils rechte Winkel einschließen. Die aneinander stoßenden Bereiche der oberen Längsträger 46 und der oberen Streben 54 sind zur Vergrößerung der Stabilität an den Unterseiten der oberen Streben 54 jeweils durch viertelkreisförmige Versteifungsbleche 56 untereinander verbunden. Zwischen dem Schweißzusammenbau 50 und den einzelnen oberen Streben 54 sowie den oberen Längsträgern 46 verbleiben somit vier rechteckige, freie Bereiche. Die oberen Längsträger 46 und die Streben 54 bilden einen Rahmen. Es können auch diagonale Streben zwischen den beiden oberen Längsträgern 46 eingefügt werden, die sich insbesondere zwischen benachbarten oberen Streben 54 erstrecken. Die oberen Streben 54 sind vorzugsweise sämtlich baugleich.

Die unteren Längsträger 48 sind jeweils mit dem darüber angeordneten oberen Längsträger 46 durch seitliche Streben 58 verbunden, die jeweils Winkel von näherungsweise 45° mit den Längsträgern 46, 48 einschließen. Die aneinander stoßenden Bereiche der oberen Längsträger 46 und der seitlichen Streben 58 sowie die aneinander stoßenden Bereiche der unteren Längsträger 48 und der seitlichen Streben 58 sind zur Vergrößerung der Stabilität an den Innen- und Außenseiten der seitlichen Streben 58 jeweils durch halbkreisförmige Versteifungsbleche 60 untereinander verbunden. Die oberen Längsträger 46 und die jeweils darunter angeordneten Längsträger 48 bilden mit den Streben 59 gemeinsam ein Gitter. Die seitlichen Streben 58 sind vorzugsweise sämtlich baugleich. Sie könnten auch mit den oberen Streben 54 baugleich sein.

Die unteren Längsträger 48 sind über die stromauf liegende Hälfte der Länge des Stützzusammenbaus 42 untereinander durch ein Bodenblech 62 verbunden. Am stromauf liegenden Ende des Stützzusammenbaus 42 sind jeweils der obere Längsträger 46 und der darunter liegende untere Längsträger 48 parallel zu einer Strebe 58 durch U-förmige Rohre 64 verbunden, die als Haltegriff dienen. Die unteren Längsträger 48 tragen auch Laschen 66, die als Befestigungspunkt der Zylinderstange des zweiten Aktors 34 dienen.

Die Längsträger 46, 48 sowie die Streben 54, 58 sind massiv oder rohrförmig ausgebildet und vorzugsweise aus Metall, z. B. Stahl, oder einem geeigneten Kunststoff. Sie sind untereinander verschweißt und/oder verklebt und/oder verschraubt und/oder vernietet und/oder verlötet oder auf beliebige andere Weise aneinander fixiert. Zur Verbesserung der Verwindungssteifheit können die Längsträger 46, 48 und/oder Streben 54, 58 auch beliebig profiliert sein, beispielsweise mit innenseitig umlaufenden Spiralen, und einen beliebigen anderen Querschnitt als den dargestellten, rechteckigen Querschnitt aufweisen.

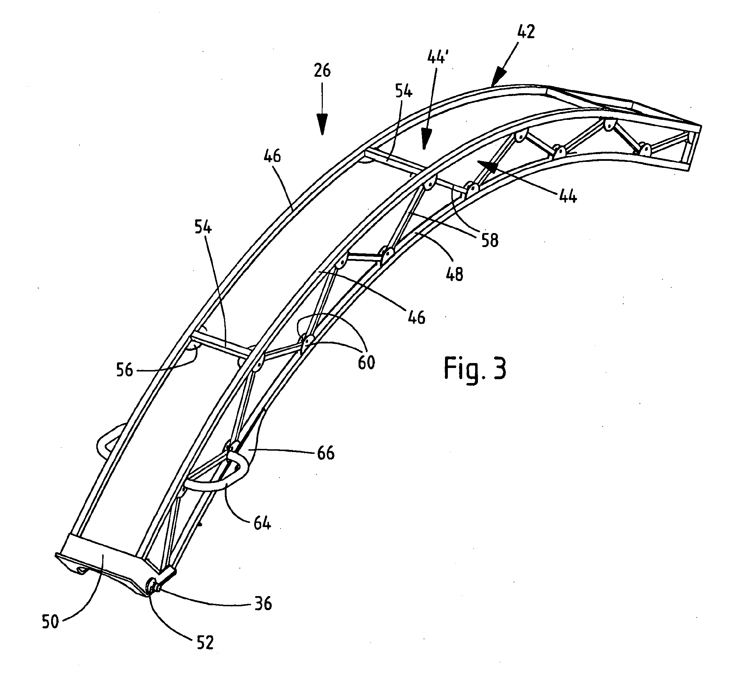

In der Figur 3 ist der Auswurfkrümmer 26 mit den Verschlusselementen 44, 44' ausgestattet. Obere Verschlusselemente 44' erstrecken sich zwischen den oberen Längsträgern 46. Die oberen Verschlusselemente 44' sind mit den Versteifungsblechen 56 verschraubt oder anderweitig daran oder an den Längsträgern 46 und/oder den Streben 54 und/oder den seitlichen Verschlusselementen 44 lösbar befestigt, z. B. verklebt oder vernietet oder magnetisch fixiert. In einer bevorzugten Ausführungsform sind vier obere Verschlusselemente 44' vorhanden, die sich jeweils zwischen zwei benachbarten oberen Streben 54 bzw. der am weitesten stromauf liegenden oberen Strebe 54 und dem Schweißzusammenbau 50 erstrecken. Es wäre aber auch ein einteiliges oberes Verschlusselement 44' möglich, das sich über die gesamte Länge des Auswurfkrümmers 26 erstreckt und umgedreht werden kann, wenn sein stromauf liegender Bereich durch Abrasion verschlissen ist, oder jede beliebige andere Aufteilung der oberen Verschlusselemente 44' in Längs- und Querrichtung des Auswurfkrümmers 26. Die oberen Verschlusselemente 44' sind entsprechend der Krümmung der oberen Längsträger 46 in sich gewölbt und in der Regel aus Metall (Stahl) hergestellt, das vorzugsweise gehärtet oder mit einer verschleißresistenten Beschichtung ausgestattet ist.

Weiterhin erstrecken sich zwischen jedem der oberen Längsträger 46 und dem darunter angeordneten unteren Längsträger 48 plattenförmige seitliche, bogenförmige Verschlusselemente 40. Die seitlichen Verschlusselemente 44 sind in sich plan und mit den Versteifungsblechen 60 verschraubt oder anderweitig daran befestigt, z. B. verklebt. In der dargestellten Ausführungsform erstrecken sich die seitlichen Verschlusselemente 44 über die gesamte Länge des Auswurfkrümmers 26, obwohl auch hier beliebige andere Aufteilungen kleinerer Verschlusselemente 44 möglich wären. Die seitlichen Verschlusselemente 44 sind ebenfalls in der Regel aus Metall (Stahl) hergestellt, das vorzugsweise gehärtet oder mit einer verschleißresistenten Beschichtung ausgestattet ist.

Der Stützzusammenbau 42 mit den Längsträgern 46, 48 und den Streben 54, 58 bildet ein Gerippe, das die benötigte mechanische Stabilität des Auswurfkrümmers bereitstellt. Die Verschlusselemente 44, 44' bilden eine seitliche und obere Führung für den vom Feldhäcksler 10 ausgeworfenen Erntegutstrom und schützen den Stützzusammenbau vor dem abrasiven Erntegutstrom. Im Verschleißfall können die Verschlusselemente 44, 44' problemlos ausgetauscht werden. Da die oberen Verschlusselemente 44' einem höheren Verschleiß als die seitlichen Verschlusselemente 44 unterworfen sind, sind sie vorzugsweise dicker als die seitlichen Verschlusselemente 44 gestaltet. Letztere können recht dünn und somit leicht dimensioniert werden.

## Patentansprüche

1. Auswurfkrümmer (26) für einen Feldhäcksler (10), **dadurch gekennzeichnet, dass** er einen rahmen- und/oder gitterförmigen Stützzusammenbau (42) und wenigstens ein an einer Innenseite des Stützzusammenbaus (42) angebrachtes Verschlusselement (44, 44') umfasst.

2. Auswurfkrümmer (26) nach Anspruch 1, **dadurch gekennzeichnet, dass** der Stützzusammenbau (42) sich entlang der Kanten des Auswurfkrümmers (26) erstreckende Längsträger (46, 48) und Streben (54, 58) zwischen den Längsträgern (46, 48) umfasst.

3. Auswurfkrümmer (26) nach Anspruch 1 oder 2, **dadurch gekennzeichnet, dass** das Verschlusselement (44, 44') austauschbar ist.

4. Auswurfkrümmer (26) nach einem der Ansprüche 1 bis 3, **dadurch gekennzeichnet, dass** das Verschlusselement (44, 44') plattenförmig ist.

5. Feldhäcksler (10) mit einem Auswurfkrümmer (26) nach einem der Ansprüche 1 bis 4.

## Claims

1. Discharge spout (26) for a forage harvester (10), **characterized in that** it comprises a frame-like or latticed supporting assembly (42) and at least one closure element (44, 44') fitted on the inside of the supporting assembly (42).

2. Discharge spout (26) according to Claim 1, **characterized in that** the supporting assembly (42) comprises longitudinal beams (46, 48) that extend along the edges of the discharge spout (26), and struts (54, 58) between the longitudinal beams (46, 48).

3. Discharge spout (26) according to Claim 1 or 2, **characterized in that** the closure element (44, 44') is interchangeable.

4. Discharge spout (26) according to one of Claims 1 to 3, **characterized in that** the closure element (44, 44') is in the form of a panel.

5. Forage harvester (10) having a discharge spout (26) according to one of Claims 1 to 4.

## Revendications

1. Goulotte de décharge (26) pour une ensileuse (10), **caractérisée en ce qu'**elle comprend un assemblage de support (42) en forme de cadre et/ou de grille et au moins un élément de fermeture (44, 44') monté sur un côté intérieur de l'assemblage de support (42).

2. Goulotte de décharge (26) selon la revendication 1, **caractérisée en ce que** l'assemblage de support (42) comprend des supports longitudinaux (46 ,48) s'étendant le long des arêtes de la goulotte de décharge (26) et des montants (54, 58) entre les supports longitudinaux (46, 48).

3. Goulotte de décharge (26) selon la revendication 1 ou 2, **caractérisée en ce que** l'élément de fermeture (44, 44') est remplaçable.

4. Goulotte de décharge (26) selon l'une quelconque des revendications 1 à 3, **caractérisée en ce que** l'élément de fermeture (44, 44') est en forme de plaque.

5. Ensileuse (10) comprenant une goulotte de décharge (26) selon l'une quelconque des revendications 1 à 4.
